# EUROPÄISCHE PATENTSCHRIFT

(11) **EP 4 613 676 B1**
(45) Veröffentlichungstag und Bekanntmachung des Hinweises auf die Patenterteilung: **25.11.2026**
(21) Anmeldenummer: 25187201.6
(22) Anmeldetag: 27.02.2024
(51) Int. Cl.: B65G 15/58, B65G 21/20

(54) **FÖRDERVORRICHTUNG**
CONVEYING DEVICE
DISPOSITIF DE TRANSPORT

(43) Veröffentlichungstag der Anmeldung: 10.09.2025
(62) Dokumentnummer(n) der früheren Anmeldung(en) nach Art. 76 EPÜ: 24159964.6 / 4 610 199
(73) Patentinhaber: SOMIC Verpackungsmaschinen GmbH & Co. KG, 83123 Amerang (DE)
(72) Erfinder: CLASSEN, Egbert, 83137 Schonstett (DE); KÖNIG, Maximilian, 83259 Schleching (DE)
(74) Vertreter: Weickmann & Weickmann PartmbB

(56) Entgegenhaltungen:
- EP-A1- 2 881 343
- DE-A1- 102005 007 472
- DE-A1- 102022 112 819

## Beschreibung

Die Erfindung betrifft eine Fördervorrichtung, umfassend ein Förderband mit einer Auflagefläche und einer von der Auflagefläche abgewandten rückseitigen Fläche, sowie wenigstens einen Strömungspfad, der die Auflagefläche mit der rückseitigen Fläche verbindet, einen Saugkasten, welcher an der rückseitigen Fläche des Förderbandes angeordnet ist und mit einem Ende des Strömungspfades, welches in die rückseitige Fläche mündet, fluidisch verbunden ist, und wenigstens ein zwischen einer Durchlassstellung und einer Sperrstellung verstellbares Ventilelement, wobei das Ventilelement den wenigstens einen Strömungspfad in seiner Sperrstellung unterbricht oder verschließt und in seiner Durchlassstellung herstellt oder freigibt.

In der Praxis sind solche Fördervorrichtungen mit einem Transportband ausgestattet, um darauf angeordnetes Fördergut zu befördern. Das Fördergut wird in der Regel mit einer zusätzlichen Haltekraft belegt, damit sein Verrutschen oder Herabfallen von dem Förderband verhindert werden kann, obgleich das Fördergut auch lediglich auf das Förderband aufgelegt transportiert werden kann.

Es ist bekannt, die erforderliche Haltekraft durch eine Beaufschlagung des Fördergutes mit Unterdruck zu erzielen. Hierzu wird in der Regel ein Saugkasten unter dem Förderband angebracht, der über ein Unterdruckgebläse und entsprechende Öffnungen in dem Förderband einen Unterdruck herstellt, der das Fördergut auf dem Förderband hält.

Derart ausgestaltete Förderbänder müssen in der Regel mit einer hohen Anzahl an Öffnungen versehen sein, um sicherstellen zu können, dass stets eine Mehrzahl von ihnen das Fördergut ansaugt und auf dem Förderband hält. Das Dokument DE 10 2005 007472 A1 offenbart eine Fördervorrichtung gemäß dem Oberbegriff des Anspruchs 1.

Es hat sich jedoch als Nachteil herausgestellt, dass dabei Öffnungen, die nicht von Fördergut bedeckt sind, im Betrieb Falschluft ansaugen, d.h. Luft, die nicht zur Erzeugung einer Haltekraft genutzt werden kann. Das Unterdruckgebläse muss dann entsprechend leistungsstark ausgelegt werden und benötigt dadurch mehr Energie als eigentlich zum Halten des Förderguts notwendig wäre. Zusätzlich werden Lärm- und Wärmeemissionen verursacht.

Um hier Abhilfe zu schaffen, wurde in der EP 2 492 222 A1 vorgeschlagen, einen Raum unter dem Förderband durch eine erhöhte Auflagerung des Förderbandes zu schaffen und das Förderband elastisch auszugestalten. Dadurch ergibt sich bei der Beaufschlagung mit Unterdruck ein Verschluss der Saugleitung, wenn kein Fördergut auf den jeweilig zu der Saugleitung benachbarten Öffnungen aufliegt, und eine Haltekraft auf das Fördergut, sobald dieses auf dem Förderband aufliegt.

Dabei verliert der elastisch ausgestaltete Teil des Förderbandes durch die Beanspruchung nach einer gewissen Zeitspanne durch Alterung, Umwelteinflüsse oder dergleichen, zumindest teilweise seine Elastizität. Hieraus ergibt sich ein verringertes Rückstellvermögen des elastisch ausgestalteten Teils des Förderbandes und damit ein weniger formschlüssiger Verschluss der Saugleitung. Daraus wiederum folgen eine erhöhte Leckage und ein erhöhter Bedarf an Unterdruck. Zusätzlich werden erhöhte Lärmemissionen verursacht.

Es ist daher Aufgabe der Erfindung, eine robustere Fördervorrichtung bereitzustellen.

Diese Aufgabe wird durch die Merkmale des Anspruchs 1 gelöst.

Die Überführung des Ventilelements von der Durchlassstellung in die Sperrstellung und zurück erfolgt hierbei aufgrund mechanischer Einwirkung, welche das

Herausragen des Ventilelements nutzt. Ein Beispiel hierfür ist das Auflegen von Fördergut auf das aus der Auflagefläche herausragende Ventilelement, welches durch das Gewicht des Förderguts in die Durchlassstellung überführt wird. Hierbei wird rein mechanische Einwirkung genutzt, jedoch keine materialinhärenten Eigenschaften, die mit der Zeit Änderungen unterliegen. Dies resultiert in einem zuverlässigeren Verschluss des Strömungspfades und somit in eine geringere Leckage und geringere Lärmemissionen über die Lebensdauer des Förderbandes.

Ein planes und damit sicheres Aufliegen des Förderguts kann erreicht werden, indem in einer Weiterbildung das Ventilelement in der Durchlassstellung im Wesentlichen bündig mit der Auflagefläche oder in dieser versenkt angeordnet sein kann.

In Weiterbildung der Erfindung kann die Fördervorrichtung ferner eine dem Saugkasten zugeordnete Vakuumeinheit umfassen. Mit einer derartigen Vakuumeinheit wird im Vergleich zu den üblicherweise eingesetzten Seitenkanalverdichtern weniger Energie verbraucht. Daher ist diese nachhaltiger und kostensparender. Außerdem wird in der Anlage und insgesamt für die Fördervorrichtung weniger Platz benötigt, da die Vakuumeinheit auch in der Regel geringere Abmessungen hat.

Vorteilhafterweise kann das Ventilelement Unterstützung bei dem Verschieben in die Sperrstellung erfahren, so dass ein sicheres und zuverlässiges Verschließen der Saugleitung bzw. des Strömungspfades z.B. nach vorzeitiger Wegnahme des Förderguts von dem Förderband oder bei Nichtbelegung durch Fördergut gewährleistet werden kann. Damit agiert die Saugleitung/der Strömungspfad nicht als Blindsauger und saugt Falschluft an, was den Energieverbrauch unverhältnismäßig erhöhen würde. In diesem Zusammenhang kann in einer Weiterbildung der Erfindung daran gedacht werden, dass das wenigstens eine Ventilelement in Richtung auf die Sperrstellung zu mit einer Vorlast belegt, beispielsweise vorgespannt, sein kann. Eine Beaufschlagung mit einer Vorlast kann hierbei eine kostengünstige Möglichkeit sein, diese Unterstützung zu erreichen. Beispielhaft könnte hier an eine Feder gedacht werden, welche unter dem Ventilelement oder an einem Ende des Strömungspfades, angeordnet ist.

Eine weitere Möglichkeit diese Unterstützung zu erreichen, kann in einer Weiterbildung der Erfindung darin bestehen, dass die Fördervorrichtung wenigstens ein Paar von Magneten umfassen kann, wobei ein Magnet aus dem Paar von Magneten in dem Förderband angeordnet sein kann und der andere Magnet aus dem Paar von Magneten in dem Ventilelement angeordnet sein kann, wobei wenigstens ein Magnet aus dem Paar von Magneten ein aktiver Magnet sein kann, und wobei die Magneten aus dem Paar von Magneten so angeordnet und dazu ausgebildet und bestimmt sein können, dass sie durch die Anziehungskraft oder auch die Abstoßungskraft, die sie aufeinander ausüben, das Ventilelement aus der Durchlassstellung in Richtung auf die Sperrstellung zu ziehen können.

In einer solchen Konfiguration sollte mindestens ein Magnet aus dem Paar von Magneten ein aktiver Magnet sein, zum Beispiel ein Permanentmagnet oder ein Elektromagnet. Aktive Magnete erzeugen im Gegensatz zu passiven Magneten auch dann ein Magnetfeld, wenn sie nicht von einem äußeren Magnetfeld beeinflusst werden. Als Permanentmagnet kann ein Seltenerdmagnet, vorzugsweise ein Samarium-Cobalt-Magnet oder ein Neodym-Samarium-Cobalt-Magnet, verwendet werden.

Obwohl es insbesondere im Hinblick auf die Stärke der magnetischen Kräfte von Vorteil ist, zwei aktive Magnete, insbesondere zwei Dauermagnete, zu verwenden, ist es insbesondere zur Kostenreduzierung der magnetischen Befestigungsvorrichtung denkbar, dass einer der Magnete aus dem Paar Magnete durch einen passiven Magneten, z.B. ein Element, das zumindest teilweise aus einem ferromagnetischen oder ferrimagnetischen Material besteht und durch den jeweils anderen Magneten magnetisiert wird, gebildet wird. Passive Magnete geben nur dann ein Magnetfeld ab, wenn sie von einem aktiven Magneten magnetisiert werden.

Eine weitere Möglichkeit diese Unterstützung zu erreichen, kann darin bestehen, dass die Fördervorrichtung in einer Weiterbildung der Erfindung wenigstens eine Druckgasdüse umfassen kann, welche dazu ausgebildet und bestimmt sein kann, das wenigstens eine Ventilelement aus der Durchlassstellung in die Sperrstellung verbringen zu können. Diese kann unter dem Ventilelement oder auf der rückseitigen Fläche angeordnet sein, um beispielsweise ein Schieberventilelement aus dem Förderband wieder herauszudrücken, oder aber über der Auflagefläche, um ein wippenartig ausgebildetes Ventilelement wieder in die Sperrstellung überzuführen.

Generell ist es wünschenswert, dass die erfindungsgemäße Fördervorrichtung möglichst schnell und effizient repariert bzw. schadhafte Teile ersetzt werden können. Es kann daher daran gedacht werden, dass das Ventilelement in einer Weiterbildung der Erfindung Teil eines Ventileinsatzes sein kann, der in einem Durchgangsloch des Förderbands ausgebildet sein kann. Hierdurch können einzelne, reparaturbedürftige Ventileinsätze getauscht werden, ohne dass die ganze Fördervorrichtung bzw. das ganze Förderband ersetzt werden muss. Besonders vorteilhaft kann es dabei sein, dass der Strömungspfad in dem Ventileinsatz ausgebildet ist.

Ökonomisch und ökologisch macht es Sinn, die erforderliche Luftförderleistung des Saugkastens, bzw. eines daran angeschlossenen Unterdruckgebläses oder einer daran angeschlossenen Vakuumpumpe, möglichst stark zu verringern. Eine Möglichkeit dazu könnte in einer Weiterbildung der Erfindung darin bestehen, ein der Auflagefläche nächstgelegenes Ende des Strömungspfads in eine Vertiefung münden zu lassen, die in der Auflagefläche ausgebildet sein kann. Dies könnte sowohl die eigentliche Auflagefläche sein als auch ein Flächenabschnitt, der nur zeitweise Teil der Auflagefläche ist, beispielsweise eine Stirnfläche eines Schieberventilelements. Da durch die Vertiefung eine größere Querschnittsfläche als durch die bloße Öffnung des Strömungspfads gebildet wird, wirkt der von dem Saugkasten bzw. von dem daran angeschlossenen Unterdruckgebläse oder der daran angeschlossenen Vakuumpumpe erzeugte Unterdruck auf eine größere Fläche und bewirkt somit eine entsprechend größere Haltekraft auf das Fördergut. Entsprechend kann mit einem geringeren Unterdruck gearbeitet werden, um die gleiche Haltekraft zu erzeugen. Dadurch wird weniger Energie verbraucht, was sich insgesamt als nachhaltiger und kostensparender darstellt. Nicht zuletzt sind die Lärmemissionen dann auch geringer. Des Weiteren kann in dieser Vertiefung auch das Ventilelement gelagert sein, so dass eine im Wesentlichen mit der Auflagefläche bündige oder in dieser versenkte Anordnung in der Durchlassstellung erreicht werden kann.

Eine konstruktiv einfache und damit (kosten-)effiziente Möglichkeit, um das Ventilelement öffnen und schließen zu können, ist erfindungsgemäß das Vorsehen eines Achselementes, welches dem Ventilelement zugeordnet und um welches das Ventilelement schwenkbar ist. Dabei unterteilt das Achselement das Ventilelement im Wesentlichen in zwei Abschnitte, wobei einer dieser Abschnitte dazu ausgebildet und bestimmt ist, den Strömungspfad zu verschließen.

Das Achselement kann gemäß einer ersten Alternative einteilig mit dem Ventilelement ausgebildet sein. Ferner kann das Schwenken durch ein Lager realisiert werden, welches in dem Förderband angeordnet sein kann. Eine einteilige Ausbildung des Achselements mit dem Ventilelement bietet den Vorteil einer Reduktion der Bauteile und vereinfacht somit nicht nur die Montage und die Wartung, sondern zeichnet sich auch durch niedrigere Gestehungskosten aus. Außerdem kann es die Reibung und den Verschleiß zwischen dem Achselement und dem Ventilelement verringern, was die Lebensdauer und die Zuverlässigkeit des Ventils erhöht.

Generell ist bei Achselementen ein kritischer Punkt wie gut die Führung und Zentrierung, und schlussendlich die Schwenkbarkeit, funktioniert. Je besser dies gelingt, desto geringer wird in der Regel auch der Spielraum zwischen den Bauteilen sein und die Abdichtung erhöht sich. Als weitere Alternative kann das Achselement der Fördervorrichtung daher auch ein längliches Element umfassen, welches in einer Durchgangsbohrung in dem Ventilelement angeordnet sein kann. Zusätzlich kann man damit die Problematik einer Kunststoff/Kunststoff-Paarung umgehen, wenn man das Achselement aus Metall herstellt und gleichermaßen kann die Problematik, die entsteht, wenn die Reibung durch Toleranzen in direkt gelagerten Bauteilen nicht genau genug berechnet werden kann, umgangen werden.

Ferner kann das Ventilelement eine Anschlagfläche aufweisen, die dazu ausgelegt und bestimmt sein kann, mit einer Gegenanschlagfläche zusammenzuwirken, wobei die Anschlagfläche und die Gegenanschlagfläche im Zusammenspiel dazu ausgelegt und bestimmt sein können, die Einschubbewegung des Abschnitts, welcher nicht dazu ausgebildet und bestimmt ist, den Strömungspfad abzudecken, in die Vertiefung in der Auflagefläche zu begrenzen. Hiermit kann eine Ausfräsung der Vertiefung in zwei Ebenen vermieden werden, und die Vertiefung kann in einer Stufe ausgefräst werden, was eine umständliche und daher kostenintensive Neueinspannung beim Fräsen überflüssig macht.

Eine noch bessere Abdichtung des Saugkanals bzw. des Strömungspfades kann dadurch erreicht werden, dass an dem Ventilelement auf der Seite, welche dem Strömungspfad zugewandt ist, eine Dichtlippe angeordnet sein kann, welche dazu ausgebildet und bestimmt sein kann, den Strömungspfad abzudecken. Dadurch kann zum einen eine höhere Flächenpressung und eine sichere Abdichtwirkung bei potenziellen Toleranzen, aber auch ein Verschleißausgleich erzielt und das Eintreten von Schmutz verhindert werden.

Aus finanziellen Aspekten und auch der Nachhaltigkeit geschuldet, sollte die Luftmenge, die der Saugkasten oder das angeschlossene Unterdruckgebläse oder die Vakuumpumpe benötigt, so gering wie möglich sein. Dies kann beispielsweise dadurch erreicht werden, dass das Ventilelement in der der Auflagefläche zugewandten Seite eine Ausnehmung, sowie wenigstens eine seitliche Ausnehmung und/oder wenigstens eine Ausnehmung in der der Auflagefläche abgewandten Seite aufweisen kann. Die der Auflagefläche zugewandte Ausnehmung bewirkt eine Vergrößerung der Querschnittsfläche und somit eine entsprechend größere Haltekraft auf das Fördergut. Wird mit einer vorgegebenen Querschnittsfläche der Vertiefung eine ausreichende Haltekraft bereitgestellt, so kann zudem bei weiterer Vergrößerung der Querschnittsfläche der Vertiefung die Luftförderleistung des Unterdruckgebläses verringert werden. Die wenigstens eine seitliche Ausnehmung und die wenigstens eine Ausnehmung in der der Auflagefläche abgewandten Seite wiederum sorgen für die Evakuierung der Ausnehmung in der der Auflagefläche zugewandten Seite.

Sobald ein Ventilelement die Umlenkwalze am Anfang des Förderbandes (von der Lauf- und Auflegerichtung des Fördergutes aus gesehen) passiert hat, sollte es sich entweder in der Sperrstellung befinden oder dahin verbracht werden. Ein einfaches und effizientes Konzept ist es, hierfür die Schwerkraft zu nutzen. Es könnte dabei beispielsweise daran gedacht werden, dass der Schwerpunkt des Ventilelements in dem Abschnitt des Ventilelements liegen kann, welcher dazu ausgebildet und bestimmt ist, den Strömungspfad zu verschließen. Beim Umfahren der Umlenkwalze am Anfang des Förderbandes schwingt das Ventilelement dann dadurch schlussendlich in die Sperrstellung. Um die Rückkehr in die Sperrstellung nicht ausschließlich der Schwerkraft zu überlassen, beispielsweise im Falle eines erneuten Anfahrens der Anlage nach einer Störung, kann des Weiteren daran gedacht werden, dass sich am Ende der Umlenkung ein Anschlag quer über das Förderband erstrecken kann, der dem Ventilelement einen Impuls in Richtung Sperrstellung gibt.

Alternativ zur Nutzung der Schwerkraft könnte auch an die Nutzung der Fliehkraft gedacht werden. Es könnte dabei beispielsweise daran gedacht werden, dass der Schwerpunkt des Ventilelements in dem Abschnitt des Ventilelements liegen kann, welcher dazu ausgebildet und bestimmt ist, aus der Auflagefläche des Förderbands herauszuragen. **In** diesem Fall wird dieser Abschnitt des Ventilelements beim Umlaufen der Umlenkrolle nach radial außen gedrängt, so dass er aus der Auflagefläche des Förderbands herausragt, während der andere Abschnitt des Ventilelements den Strömungspfad verschließt. Setzt die Wirkung des Saugkastens rechtzeitig ein, so ist dafür Sorge getragen, dass der Strömungspfad auch verschlossen bleibt.

Gemäß einer weiteren Alternative kann sogar an eine Verlagerung des Schwerpunkts zwischen den beiden Abschnitten des Ventilelements gedacht werden. Hierzu kann beispielsweise in dem Ventilelement ein Hohlraum vorgesehen sein, in dem eine vorbestimmte Masse hin und her verlagerbar aufgenommen sein kann. Diese Masse kann insbesondere von einer Flüssigkeit oder einem oder mehreren Festkörpern, beispielsweise einer oder mehreren Kugeln, gebildet sein.

Alternativ zu der vorstehend erläuterten Wippe kann das Ventilelement in einer Weiterbildung der Erfindung als Schieberventilelement ausgebildet sein, das zwischen der Durchlassstellung und der Sperrstellung verschiebbar sein kann, in denen es den Strömungspfad unterbricht oder herstellt, und dass ein Abschnitt des Strömungspfads in dem Schieberventilelement verlaufen kann, wobei ein Ende dieses Abschnitts in eine Umfangsfläche des Schieberventilelements münden kann, und dass der Strömungspfad wenigstens einen weiteren Abschnitt aufweisen kann, dessen eines Ende in der Durchlassstellung des Schieberventilelements in das eine Ende des einen Abschnitts des Strömungspfads münden kann, während es in der Sperrstellung relativ zu diesem versetzt angeordnet sein kann. Schieberventile bieten in der Regel eine hohe Dichtheit und einen geringeren Strömungswiderstand, da sie senkrecht zur Strömung geschlossen werden.

Dabei kann das Schieberventilelement in der Sperrstellung relativ zur rückseitigen Fläche des Förderbands in den Körper des Förderbands zurückversetzt angeordnet sein, während es in der Durchlassstellung mit der rückseitigen Fläche vorzugsweise im Wesentlichen bündig angeordnet sein kann. Dadurch wird, unabhängig von der jeweiligen Stellung des Schieberventilelements, dessen Vorbeibewegen an den Rändern des Saugkastens erleichtert, weil es nicht nach unten übersteht.

Dabei kann die Fördervorrichtung so ausgestaltet sein, dass diese ferner eine Auskragung an dem der Auflagefläche nächstgelegenen Ende des Schieberventilelements mit Anschlagfläche und dieser zugeordneter Gegenanschlagfläche umfassen kann, wobei das Zusammenwirken von Anschlagfläche und Gegenanschlagfläche eine Einschubbewegung des Schieberventilelements in die Auflagefläche hinein begrenzen kann. Mit dieser Ausgestaltung kann verhindert werden, dass sich das Schieberventilelement unkontrolliert in das Förderband hinein bewegt und damit die Funktion dessen beeinträchtigt wird.

Dabei kann die Fördervorrichtung ferner eine Auskragung an dem der rückseitigen Fläche nächstgelegenen Ende des Schieberventilelements mit Anschlagfläche und dieser zugeordneter Gegenanschlagfläche umfassen, wobei das Zusammenwirken von Anschlagfläche und Gegenanschlagfläche eine Einschubbewegung des Schieberventilelements in die rückseitige Fläche hinein begrenzt. Durch die Begrenzung des Einfahrweges des Schieberventilelements wird die einwandfreie Funktion des Schieberventilelements sichergestellt.

Die Vertiefung kann dabei in dem Schieberventilelement ausgebildet sein. Auch hierbei wird, wie oben bereits beschrieben, durch die Vertiefung die erforderliche Luftförderleistung des Saugkastens verringert, wobei gleichzeitig bei einem Schaden an dem Schieberventilelement, bzw. dem Ventileinsatz nicht das komplette Förderband getauscht werden muss.

Es kann weiter daran gedacht werden, dass dabei die Fördervorrichtung eine Rückstellwalze mit wenigstens einem Vorsprung, der dazu ausgebildet und bestimmt sein kann, das wenigstens eine Schieberventilelement aus der Durchlassstellung in die Sperrstellung zu verschieben, umfassen kann. Die Rückstellwalze kann beispielsweise eine Umlenkwalze des Förderbandes oder auch eine gesonderte Walze des Förderbandes sein. Die Rückstellwalze unterstützt das Ventilelement bei dem Verschieben in die Sperrstellung, so dass ein sicheres und zuverlässiges Verschließen der Saugleitung/des Strömungspfades z.B. nach Wegnahme des Förderguts von dem Förderband gewährleistet werden kann. Dies hat den Vorteil, dass die Saugleitung/der Strömungspfad nicht als Blindsauger wirkt und dadurch den Energieverbrauch unverhältnismäßig erhöht.

Eine weitere Vereinfachung in der Herstellung des erfindungsmäßen Fördervorrichtung kann dadurch erreicht werden, dass dabei das Schieberventilelement in einer Längsrichtung im Wesentlichen als Zylinder ausgebildet sein kann. Eine Zylinderform des Schieberventilelements erleichtert zudem dessen Einbau und ist aufgrund der fehlenden Kanten verschleißärmer.

Um verhindern zu können, dass das Schieberventilelement durch die vom Saugkasten ausgehende Saugkraft stets in die Durchlassstellung gezogen wird, kann das Schieberventilelement durch einen Haltemechanismus, beispielsweise einen Rastmechanismus, vorzugsweise einen Kugel-Index-Mechanismus, in der Sperrstellung gehalten und nur durch die mechanische Einwirkung des zu fördernden Last in die Durchlassstellung übergeführt werden. Zusätzlich oder alternativ zu dem Haltemechanismus kann aber auch die Reibung des Schieberventilelements in seiner Führung so hoch gewählt werden, dass die Saugkraft des Saugkastens das Schieberventilelement in die Durchlassstellung zu ziehen vermag.

Die Erfindung wird im Folgenden anhand der beigefügten Zeichnung an mehreren Ausführungsbeispielen näher erläutert werden. Es stellt dar:
- Figur 1: eine Schnittansicht der Fördervorrichtung in einer ersten Ausführungsform; und
- Figur 2a: eine Schnittansicht der ersten Ausführungsform der Fördervorrichtung ohne aufliegendes Fördergut im Detail;
- Figur 2b: eine Schnittansicht der ersten Ausführungsform der Fördervorrichtung mit aufliegendem Fördergut im Detail;
- Figur 3: eine Schnittansicht einer Rückstellwalze;
- Figuren 4a bis 4d: mögliche Varianten des Verlaufs des Strömungspfads;
- Figur 5a: eine Schnittansicht einer zweiten Ausführungsform der Fördervorrichtung ohne aufliegendes Fördergut in der Durchlassstellung im Detail;
- Figur 5b: eine Schnittansicht der zweiten Ausführungsform der Fördervorrichtung ohne aufliegendes Fördergut in der Sperrstellung im Detail;
- Figur 6: eine detaillierte Schnittansicht eines Achselements der zweiten Ausführungsform;
- Figur 7: eine detaillierte Schnittansicht eines Ventilelements einer Abwandlung der zweiten Ausführungsform;
- Figur 8: eine detaillierte Schnittansicht einer Dichtlippe des Ventilelements der Abwandlung der zweiten Ausführungsform;
- Figur 9: eine detaillierte Schnittansicht eines Ventilelements einer weiteren Abwandlung der zweiten Ausführungsform mit Ausnehmungen; und
- Figur 10: eine Schnittansicht eines Förderbands der zweiten Ausführungsform.

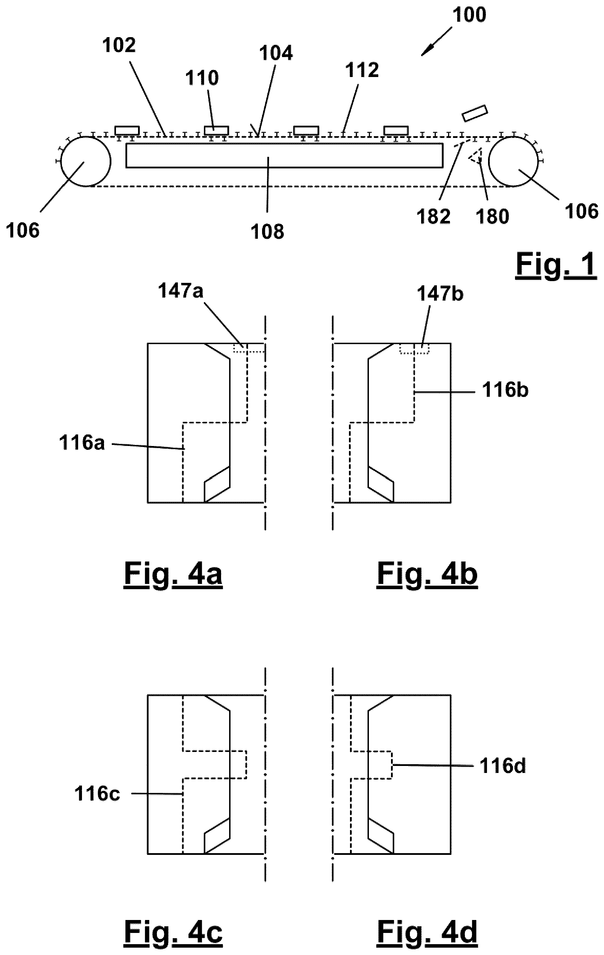

**In** Figur 1 ist eine erfindungsgemäße Fördervorrichtung ganz allgemein mit 100 bezeichnet. Die Fördervorrichtung 100 umfasst ein Förderband 102 mit einer Auflagefläche 104, das als umlaufendes Gurtförderband über zwei Umlenkwalzen 106 geführt ist, einen Saugkasten 108, der unter dem oberen Trum des Förderbandes 102 angeordnet ist, und Fördergut 110, das auf dem Förderband 102 aufliegt.

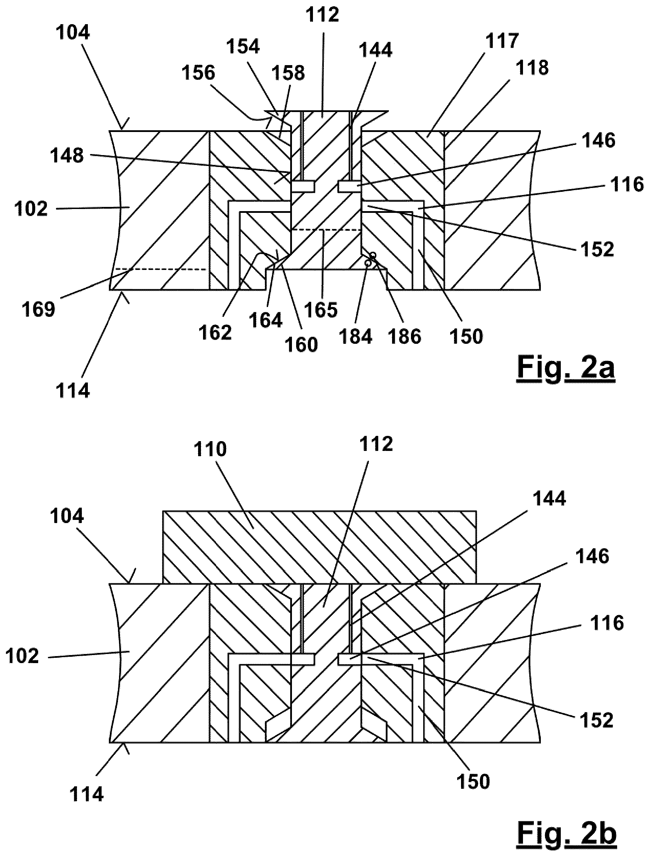

Das Förderband 102 wird während der Transportbewegung, in der Führung oben zwischen den beiden Umlenkwalzen 106, streckenweise über dem Saugkasten 108 geführt. Der Saugkasten 108 kann auch als Unterdruckkammer ausgebildet sein und ist an eine nicht dargestellte Vakuumpumpe angeschlossen. Anstelle der Vakuumpumpe kann auch ein Unterdruckgebläse oder ein Seitenkanalverdichter verwendet werden. Wenn sich das Ventilelement 112 in der Durchlassstellung befindet, steht der Saugkasten 108 über einen Strömungspfad 116 (siehe Figur 2a) mit der Auflagefläche 104 in Fluidverbindung, so dass auf das auf das Förderband 102 aufgelegte Fördergut 110 eine Saugkraft ausgeübt wird.

Bei der Ausführungsform der Figur 1 sind die Ventilelemente 112 als, vorzugsweise zylindrische, Schieberventilelemente ausgebildet.

Die Schieberventilelemente 112 gemäß den Figuren 2a und 2b sind in dem Förderband 102 derart angeordnet, dass sie in der Sperrstellung (siehe Figur 2a) relativ zu einer rückseitigen Fläche 114 des Förderbands 102 in den Körper des Förderbands 102 zurückversetzt angeordnet sind, während die Schieberventilelemente 112 in der Durchlassstellung (siehe Figur 2b) mit der rückseitigen Fläche 114 vorzugsweise im Wesentlichen bündig oder leicht vertieft angeordnet sind. Hingegen ragt das Ventilelement 112 in der Sperrstellung wenigstens teilweise aus der Auflagefläche 104 des Förderbands 102 heraus. Demgegenüber ist das Schieberventilelement 112 in der Durchlassstellung im Wesentlichen bündig oder leicht vertieft mit der Auflagefläche 104 oder in dieser versenkt angeordnet. Zwischen diesen beiden Stellungen sind die Schieberventilelemente 112 hin und her verschiebbar.

In Figur 2a wird ein Ausschnitt der erfindungsgemäßen Fördervorrichtung 100 in der Sperrstellung gezeigt. In dieser Stellung liegt kein Fördergut 110 auf dem Förderband 102 auf und es kann durch den Versatz der beiden Enden 146 und 152 der Abschnitte 144, 150 des Strömungspfads 116 durch das Schieberventilelement 112 keine oder nur in sehr geringem Umfang Falschluft gezogen werden.

In der Durchlassstellung des Schieberventilelements 112 mündet das Ende 146 des Abschnitts 144 des Strömungspfads 116, welcher in dem Schieberventilelement 112 verläuft, in das Ende 152 des Abschnitts 150 des Strömungspfads 116 und steht mit diesem in Fluidverbindung.

Des Weiteren kann das Schieberventilelement 112 Teil eines Ventileinsatzes 117 sein, der in einem Durchgangsloch 118 des Förderbands 102 ausgebildet ist. Der Ventileinsatz 117 kann als zylindrischer Körper mit einer mittigen Aussparung zum Einsatz des Schieberventilelements 112 ausgebildet sein und ist in das Förderband 102 so eingesetzt, so dass er mit seiner Oberfläche eine Ebene mit der Auflagefläche 104 und der rückseitigen Fläche 114 bildet.

Das Schieberventilelement 112 hat in dieser Ausführungsform einen zylindrischen Körper und an dessen Enden jeweils umlaufende Auskragungen 154 und 160. Die Auskragungen 154, 160 sind mittels entsprechender Anschlagflächen 156, 162 formschlüssig in entsprechende Einbuchtungen 158 und 164 des Ventileinsatzes 117 einlegbar, welche Gegenanschlagflächen darstellen. Vorteilhafterweise ist das Schieberventilelement 112 hierbei zweiteilig ausgebildet, wie in Figur 2a durch die gestrichelte Linie 165 angedeutet ist, und entsprechend zusammengefügt, so dass ein Einbau des Schieberventilelements mit Auskragungen 154, 160 in das Förderband 102 möglich ist.

Die Auskragung 154, die an dem der Auflagefläche 104 nächstgelegenen Ende des Schieberventilelements 112 angeordnet ist, begrenzt mittels des Zusammenwirkens der Anschlagfläche 156 mit der dieser zugeordneten Gegenanschlagfläche 158 die Einschubbewegung des Schieberventilelements 112 in die Auflagefläche 104 hinein.

Gleichermaßen begrenzt die Anschlagfläche 162 der Auskragung 160 an dem der rückseitigen Fläche 114 nächstgelegenen Ende des Schieberventilelements 112 im Zusammenwirken mit der dieser zugeordneten Gegenanschlagfläche 164 eine Einschubbewegung des Schieberventilelements 112 in die rückseitige Fläche 114 hinein.

Das Ende 146 des Abschnitts 144 des Strömungspfads 116 kann umlaufend um eine Längsachse des z.B. zylinderförmigen Körpers des Schieberventilelements 112 als Ringnut in dessen Oberfläche ausgebildet sein. Des Weiteren kann das Ende 146 des Strömungspfads 116 auch als einzelne Einbuchtung oder als mehrere Einbuchtungen in der bezeichneten Oberfläche ausgeführt werden.

Das Schieberventilelement 112 wird in die Durchlassstellung übergeführt, wenn z.B. Fördergut 110 auf dem Schieberventilelement 112 platziert wird. Durch die Fluidkommunikation der Enden 146 und 152 der Abschnitte 144 und 150 des Strömungspfads 116 wird dann durch den von dem Saugkasten 108 erzeugten Unterdruck eine Haltekraft auf das Fördergut 110 aufgebracht, welche dieses sicher auf dem Förderband 102 hält.

Nachdem die Schieberventilelemente 112 die Strecke über dem Saugkasten 108 durchfahren haben, bzw. wenn das Fördergut 110, welches auf einer oder auf mehreren Schieberventilelementen 112 gelegen ist, von dem Förderband abgenommen wird, wird das/die vorher von dem Fördergut 110 belegte(n) Schieberventilelement(e) 112 wieder in die Sperrstellung der Figur 2a verbracht.

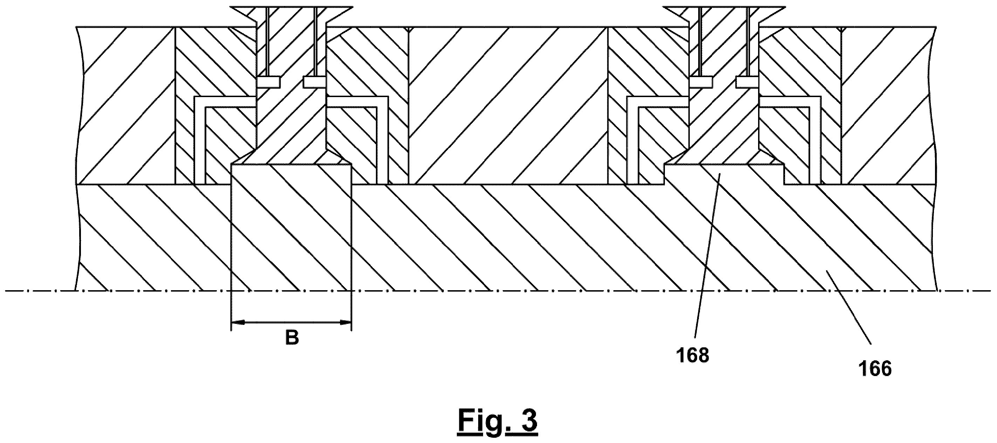

Durch verschiedene Gegebenheiten kann dies unter Umständen nicht selbsttätig oder nicht vollständig erfolgen. Daher kann daran gedacht werden, die in Förderrichtung nach dem Saugkasten 108 angeordnete Umlenkwalze 106 gemäß Figur 3 als Rückstellwalze 166 mit wenigstens einem Vorsprung 168 der Breite B anzuordnen. Die Breite B ist dabei vorzugsweise gleich oder kleiner einem Durchmesser des Schieberventilelements 112 an der der rückseitigen Fläche 114 zugeordneten Oberfläche.

Mit einer solchen Rückstellwalze 166 ist es durch die mechanische Einwirkung der Vorsprünge 168 möglich, die Schieberventilelemente 112 wieder in die Sperrstellung der Figur 2a zurückzuführen.

Alternativ zu den wenigstens einem Vorsprung 168 kann gleichermaßen die Welle der Rückstellwalze 166 gestuft ausgebildet sein und in eine oder mehrere Nuten 169 in dem Förderband 102 eingreifen.

Als weitere Alternativen kann die Rückführung der Schieberventilelemente 112 in die Sperrstellung durch einen Druckluftstoß aus einer in Figur 1 grobschematisch bei 180 angedeuteten Druckgasdüse oder durch mechanische Einwirkung mittels einer in Figur 1 grobschematisch bei 182 angedeuteten Rückführleiste bewerkstelligt werden.

Es könnte auch daran gedacht werden, das Schieberventilelement 112 in Richtung auf die Sperrstellung zu mit einer Vorlast zu belegen. Mittels dieser Vorlast wird auf das Schieberventilelement 112 eine Kraft ausgeübt, welche es in Richtung der Auflagefläche 104, bzw. der Sperrstellung, die in der Figur 2a dargestellt ist, drückt. Diese Vorlast kann beispielsweise durch eine Feder, welche unter dem Schieberventilelement 112, der rückseitigen Fläche 114 zugeordnet, angeordnet ist.

Eine weitere Möglichkeit diese Unterstützung zum Verfahren aus der Durchlassstellung in die Sperrstellung zu erhalten, besteht in der Nutzung von Magneten 184, 186, die in Figur 2a grobschematisch angedeutet sind. Ein Magnet 186 aus einem Paar von Magneten ist dabei in dem Förderband 102 oder, falls in dem Förderband 102 vorhanden, in dem Ventileinsatz 117 angeordnet und der andere Magnet 184 aus dem Paar von Magneten ist in dem Schieberventilelement 112 angeordnet, so dass die Magneten aus dem Paar von Magneten eine Anziehungskraft aufeinander ausüben können und dadurch das Ventilelement 112 aus der Durchlassstellung in die oder mindestens in Richtung auf die Sperrstellung zu ziehen können.

Zusätzlich oder alternativ könnten auch an dem anderen Ende des Schieberventilelements 112 Magneten angeordnet sein, also im Bereich der Auskragung 154. Diese (nicht dargestellten) Magneten müssten dann aber so orientiert sein, dass sie sich gegenseitig abstoßen, um so das Schieberventilelement 112 in dessen Sperrstellung zu drängen.

Mindestens ein Magnet aus dem Paar kann vorteilhafterweise ein aktiver Magnet sein, der andere kann ein passiver Magnet sein oder ein zweiter aktiver Magnet.

In den Figuren 4a bis 4d sind grobschematisch alternative Verläufe 116a, 116b, 116c und 116d des Strömungspfads dargestellt, wobei in den Figuren 4a und 4b bei 147a bzw. 147b auch noch die Möglichkeit angedeutet ist, dass der Strömungspfad in eine Vertiefung der Auflagefläche des Förderbands mündet, um die auf aufgelegtes Fördergut einwirkende Haltekraft zu erhöhen.

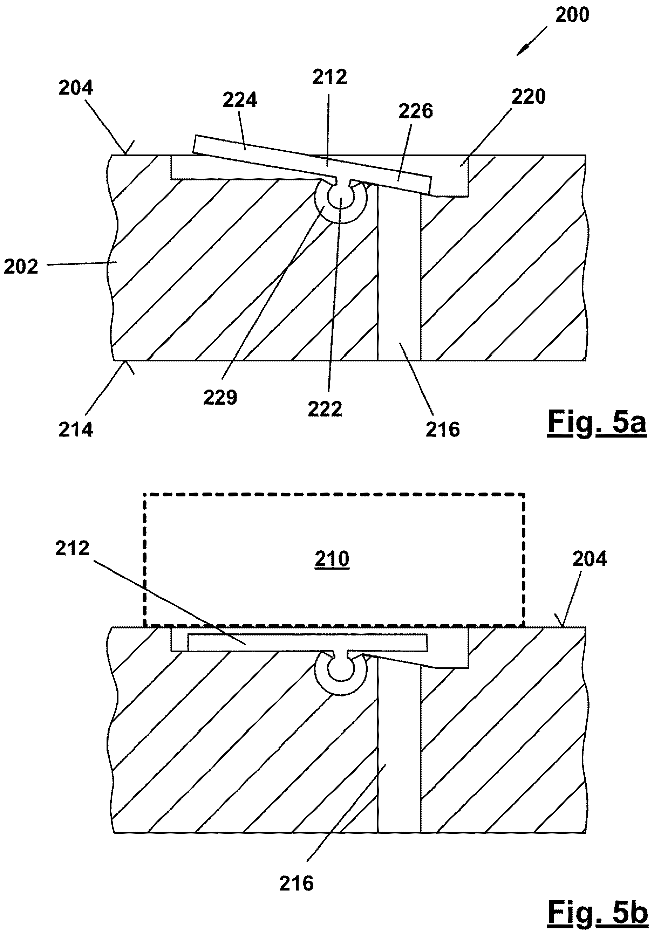

In den Figuren 5a, 5b und 6 bis 10 sind verschiedene Varianten einer zweiten Ausführungsform der Erfindung dargestellt, die sich von der ersten Ausführungsform der Figuren 1, 2a, 2b und 3 hauptsächlich dadurch unterscheidet, dass das Ventilelement als Wippe ausgebildet ist. Daher sind in den Figuren 5a, 5b und 6 bis 10 analoge Teile mit den gleichen Bezugszeichen versehen wie in den Figuren 1, 2a, 2b und 3, jedoch vermehrt um die Zahl 100. Darüber hinaus wird die zweite Ausführungsform nachstehend nur insoweit beschrieben werden, als sie sich von der ersten Ausführungsform unterscheidet, auf deren Beschreibung hiermit ansonsten ausdrücklich verwiesen sei.

Bei der zweiten Ausführungsform ist das Wippen-Ventilelement 212 in einer Vertiefung 220 gelagert, die in der Auflagefläche 204 des Förderbandes 202 eingebracht ist.

Ferner umfasst das Ventilelement 212 ein Achselement 222, um welches das Ventilelement 212 schwenkbar ist. Durch dieses Achselement 222 wird das Ventilelement 212 in zwei Abschnitte 224, 226 unterteilt. Ein Abschnitt der bezeichneten zwei Abschnitte ist so ausgebildet, dass dieser den Strömungspfad 216 verschließen kann.

Das Achselement 222 kann einteilig mit dem Ventilelement ausgebildet sein, wie dies aus den Figuren 5a und 5b ersichtlich ist. Das Achselement kann hierbei in einem Lager 229 gelagert sein, welches in dem Förderband 202, vorzugsweise in dem Boden der Vertiefung 220, ausgebildet ist.

Es sei an dieser Stelle darauf hingewiesen, dass auf das Lager 229 auch verzichtet werden kann.

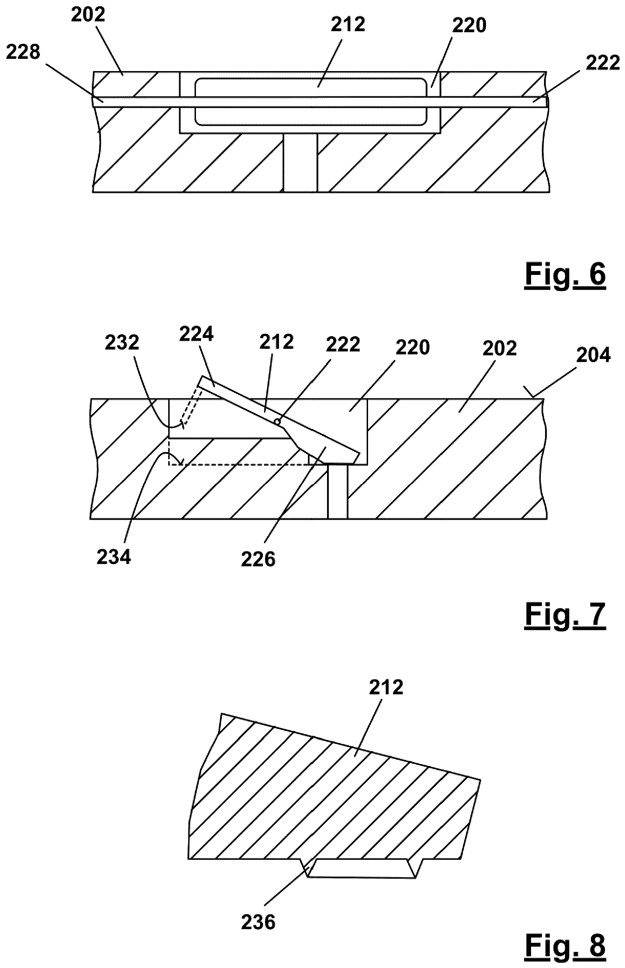

Alternativ hierzu kann das Achselement 222 ein längliches Element 228 umfassen (siehe Figur 6). Dies kann beispielsweise eine Achse sein, vorzugsweise aus Metall, die mittels Presspassung in eine Durchgangsbohrung in dem Förderband 202 und durch das Ventilelement 212 eingebracht ist.

Die Vertiefung 220, in der das Ventilelement 212 gelagert ist, kann gemäß den Figuren 5a und 5b einen horizontalen, ebenen Boden aufweisen, wie dies auch in Figur 7 gestrichelt angedeutet ist, oder gemäß Figur 7 einen gestuften Boden aufweisen.

Damit das Ventilelement 212 die Schwenkbewegung ausführen kann, um von der Sperrstellung in die Durchlassstellung und zurück zu gelangen, kann das Ventilelement 212 insbesondere im erstgenannten Fall beispielsweise eine Anschlagfläche 232 umfassen. Diese Anschlagfläche wirkt mit einer Gegenanschlagfläche 234 zusammen, um die Einschubbewegung des Abschnitts 224 in die Vertiefung 220 zu begrenzen und so zu verhindern, dass der Abschnitt 226 des Ventilelements 212 in einer Durchlassstellung aus der Auflagefläche 204 herausragt und das Fördergut 210 unter Umständen anhebt.

Diese Gegenanschlagsfläche 234 kann, wie in Figur 7 dargestellt ist, der Boden der Vertiefung 220 sein, oder eine Erhöhung auf oder in diesem.

Ist der Boden der Vertiefung 220 gestuft ausgebildet, so kann hierdurch verhindert wird, dass das Ventilelement 212 in einer Durchlassstellung aus der Auflagefläche 204 herausragt und das Fördergut 210 ggf. anhebt.

Das Ventilelement 212 ist in dem Förderband 202 derart angeordnet, dass es in der Sperrstellung wenigstens teilweise aus der Auflagefläche 204 des Förderbandes 202 herausragt, wie es aus der Figur 5a ersichtlich ist. In der Durchlassstellung gemäß Figur 5b hingegen ist das Ventilelement 212 im Wesentlichen bündig mit der Auflagefläche 204 oder in dieser versenkt angeordnet.

In der Figur 5b befindet sich das Ventilelement 212 in der Durchlassstellung, wobei der Strömungspfad 216 zur Auflagefläche 204 hin geöffnet und in Fluidverbindung mit dem Saugkasten 208 steht, so dass Unterdruck auf das Fördergut 210 aufgebracht wird.

In der Figur 5a ist die Sperrstellung gezeigt. In dieser Stellung liegt kein Fördergut 210 auf dem Förderband 202 auf und es kann durch den Verschluss des Strömungspfads 216 durch das Ventilelement 212 keine oder nur in sehr geringem Umfang Falschluft gezogen werden.

Auch in dieser Ausführungsform kann das Ventilelement 212 Teil eines Ventileinsatzes 217 sein, der in einem Durchgangsloch des Förderbands 202 ausgebildet ist (nicht in den Figuren für diese Ausführungsform dargestellt).

Um die Abdichtung zwischen dem Ventilelement in der Sperrstellung und dem Strömungspfad 216 weiter zu verbessern, kann, wie dies in Figur 8 dargestellt ist, daran gedacht werden, an dem Ventilelement 212 auf der Seite, welche dem Strömungspfad 216 zugewandt ist, eine Dichtlippe 236 anzuordnen, welche dazu ausgebildet und bestimmt ist, den Strömungspfad 216 abzudecken. Eine solche Dichtlippe kann beispielsweise eine Überhöhung des Ventilelements von z.B. 0,5mm sein. Ein Beispiel hierfür kann der Figur 8 entnommen werden.

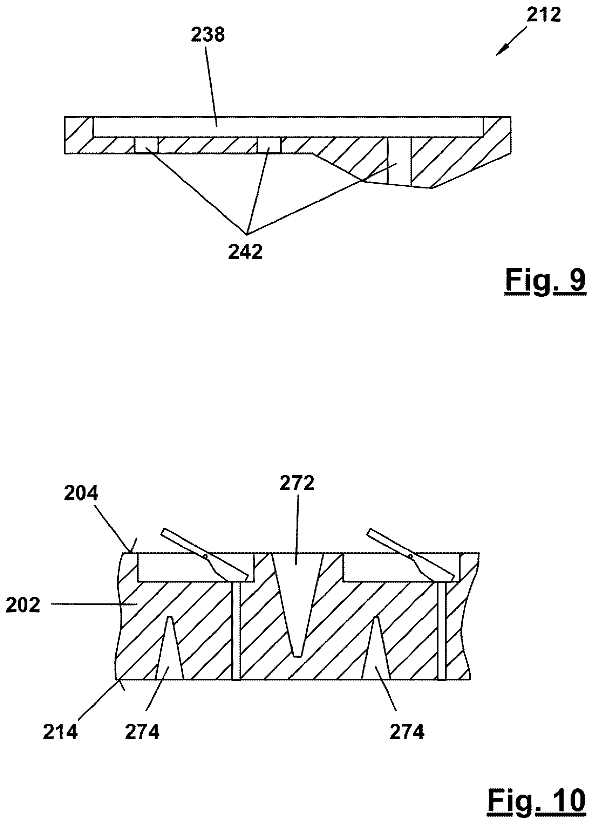

Wie in Figur 9 dargestellt ist, kann auch ein als Wippe ausgebildetes Ventilelement 212 zur Erhöhung der auf das Fördergut ausgeübten Haltekraft in seiner der Auflagefläche 204 zugeordneten Seite eine Vertiefung 238 umfassen. Durch Ausnehmungen 242 in der der Auflagefläche 204 abgewandten Seite, wird die Vertiefung 238 evakuiert.

Um in Weiterbildung der Wippenlösung ein sicheres und zuverlässiges Verschließen der Saugleitung/des Strömungspfades z.B. nach vorzeitiger Wegnahme des Förderguts von dem Förderband oder bei Nichtbelegung durch Fördergut zu erreichen, kann auch daran gedacht werden, dass der Schwerpunkt des Ventilelements 212 in dem Abschnitt 226 des Ventilelements 212 liegt, welcher den Strömungspfad 216 verschließt. Dies kann beispielsweise durch eine Verlängerung des Abschnitts 226 erfolgen oder durch eine Vergrößerung des Abschnitts 226. Des Weiteren kann daran gedacht werden, den Abschnitt 226 aus einem schwereren Material zu fertigen als den Abschnitt 224.

Infolgedessen wird dann das Ventilelement 212, wenn es die Umlenkwalze 206 durchfahren hat und sich wieder auf dem oberen Teil der Durchfahrstrecke (siehe beispielhaft für die Durchfahrstrecke auch Figur 1) und noch vor dem Beginn der Strecke, die es über den Saugkasten 208 fährt, befindet, ohne dass zunächst zusätzliche Kräfte notwendig sind, also rein schwerkraftbedingt, in die Sperrstellung kippen. Um die Rückkehr in die Sperrstellung nicht ausschließlich der Schwerkraft zu überlassen, kann des Weiteren daran gedacht werden, dass sich am Ende der Umlenkung durch die Umlenkwalze 206 oder ein wenig danach (in Förderrichtung) ein Anschlag quer über das Förderband 202 erstrecken kann, der dem Ventilelement 212 einen Impuls in Richtung Sperrstellung gibt.

Ein derartiger Effekt kann auch durch einen Druckluftstoß aus einer (in den Figuren nicht dargestellten) Druckgasdüse auf das Ventilelement 212 erreicht werden oder durch Beaufschlagung des Ventilelements 212 in Richtung auf die die Sperrstellung zu mit einer Vorlast. Mittels einer solchen Vorlast wird auf das Ventilelement 212 eine Kraft ausgeübt, welche es in Richtung des Strömungspfads 216 und der Sperrstellung drückt, wie dies in Figur 5b dargestellt ist. Eine Möglichkeit hierzu kann eine Feder sein, die beispielsweise an dem Abschnitt 226 des Ventilelements 212 auf der dem Strömungspfad zugewandten Seite angeordnet sein kann.

Wie oben bereits diskutiert, kann eine weitere Möglichkeit für die Unterstützung zum Verbringen aus der Durchlassstellung in die Sperrstellung in der Nutzung von Magneten liegen.

Zur Reduzierung der Dehnung des Förderbandes 202 auf dessen Außenseite können, wie dies in Figur 10 dargestellt ist, Einschnitte 272, 274 in das Förderband 202 eingebracht werden. Dies ist von Vorteil, da das Förderband 202 in dieser Ausführungsform höher, d.h. eine größere Dicke aufweisend, ausgestaltet werden kann. Diese Einschnitte können, wie es der Figur 10 entnommen werden kann, in der Auflagefläche 204 als Einschnitt 272 oder auf der rückseitigen Fläche 214 als Einschnitt 274 angeordnet sein. Vorteilhafterweise sind die Einschnitte 272, 274 keilförmig ausgebildet. Abschließend sei darauf hingewiesen, dass derartige Einschnitte auch bei der ersten Ausführungsform gemäß den Figuren 1, 2a, 2b und 3 vorgesehen sein können.

## Patentansprüche

1. Fördervorrichtung (100), umfassend
• ein Förderband (102) mit einer Auflagefläche (104) und einer von der Auflagefläche (104) abgewandten rückseitigen Fläche (114),
• wenigstens einen Strömungspfad (116), der die Auflagefläche (104) mit der rückseitigen Fläche (114) verbindet,
• einen Saugkasten (108), welcher an der rückseitigen Fläche (114) des Förderbands (102) angeordnet ist und mit einem Ende des Strömungspfads (116), welches in die rückseitige Fläche (114) mündet, fluidisch verbunden ist,
• wenigstens ein zwischen einer Durchlassstellung und einer Sperrstellung verstellbares Ventilelement (112),
wobei das Ventilelement (112) den wenigstens einen Strömungspfad (116) in seiner Sperrstellung unterbricht oder verschließt und in seiner Durchlassstellung herstellt oder freigibt, und
wobei das Ventilelement (112) in der Sperrstellung wenigstens teilweise aus der Auflagefläche (104) des Förderbands (102) herausragt,
**dadurch gekennzeichnet,**
**dass** dem Ventilelement (212) ferner ein Achselement (222) zugeordnet ist, um welches das Ventilelement (212) schwenkbar ist und welches das Ventilelement (212) im Wesentlichen in zwei Abschnitte (224, 226) unterteilt,
wobei einer dieser Abschnitte (226) dazu ausgebildet und bestimmt ist, den Strömungspfad (216) zu verschließen.

2. Fördervorrichtung nach Anspruch 1,
**dadurch gekennzeichnet, dass** das Ventilelement (112) in der Durchlassstellung im Wesentlichen bündig mit der Auflagefläche (104) oder in dieser versenkt angeordnet ist.

3. Fördervorrichtung nach Anspruch 1 oder 2,
**dadurch gekennzeichnet, dass** das wenigstens eine Ventilelement (112) in Richtung auf die Sperrstellung zu mit einer Vorlast belegt ist.

4. Fördervorrichtung nach einem der vorhergehenden Ansprüche,
ferner umfassend wenigstens ein Paar von Magneten (180, 182),
wobei ein Magnet (180) aus dem Paar von Magneten in dem Förderband (102) oder einem mit diesem verbundenen Teil (117) angeordnet ist und der andere Magnet (182) aus dem Paar von Magneten in dem Ventilelement (112) angeordnet ist,
wobei wenigstens ein Magnet aus dem Paar von Magneten ein aktiver Magnet ist, und
wobei die Magneten (180, 182) aus dem Paar von Magneten so angeordnet und dazu ausgebildet und bestimmt sind, dass sie eine Anziehungskraft oder eine Abstoßungskraft aufeinander ausüben, um das Ventilelement (112) aus der Durchlassstellung in Richtung auf die Sperrstellung zu zu drängen.

5. Fördervorrichtung nach einem der vorhergehenden Ansprüche, ferner umfassend wenigstens eine Druckgasdüse (184), welche dazu ausgebildet und bestimmt ist, das wenigstens eine Ventilelement (112) aus der Durchlassstellung in die Sperrstellung zu verbringen.

6. Fördervorrichtung nach einem der vorhergehenden Ansprüche,
**dadurch gekennzeichnet, dass** das Ventilelement (112) Teil eines Ventileinsatzes (117) ist, der in einem Durchgangsloch (118) des Förderbands (102) ausgebildet ist, wobei vorzugsweise der Strömungspfad (116) in dem Ventileinsatz (117) ausgebildet ist.

7. Fördervorrichtung nach einem der vorhergehenden Ansprüche,
**dadurch gekennzeichnet, dass** das Achselement (222) mit dem Ventilelement (212) einteilig ausgebildet ist.

8. Fördervorrichtung nach einem der vorhergehenden Ansprüche,
**dadurch gekennzeichnet, dass** das Ventilelement (212) eine Anschlagfläche (232) aufweist, die dazu ausgelegt und bestimmt ist, mit einer Gegenanschlagfläche (234) zusammenzuwirken,
wobei die Anschlagfläche (232) und die Gegenanschlagfläche (234) im Zusammenspiel dazu ausgelegt und bestimmt sind, eine Bewegung des Abschnitts (224), welcher nicht dazu ausgebildet und bestimmt ist, den Strömungspfad (216) abzudecken, in eine in der Auflagefläche (224) ausgebildete Vertiefung (220) hinein zu begrenzen.

9. Fördervorrichtung nach einem der vorhergehenden Ansprüche,
**dadurch gekennzeichnet, dass** an dem Ventilelement (212) auf der Seite, welche dem Strömungspfad (216) zugewandt ist, eine Dichtlippe (236) angeordnet ist, welche dazu ausgebildet und bestimmt ist, den Strömungspfad (216) abzudecken.

10. Fördervorrichtung nach einem der vorhergehenden Ansprüche,
**dadurch gekennzeichnet, dass** das Ventilelement (212) in der der Auflagefläche (204) zugewandten Seite eine Ausnehmung (238), sowie wenigstens eine seitliche Ausnehmung (240) und/oder wenigstens eine Ausnehmung (242) in der der Auflagefläche (204) abgewandten Seite aufweist.

## Claims

1. Conveyor device (100), comprising
• a conveyor belt (102) with a support surface (104) and a rear surface (114) facing away from the support surface (104),
• at least one flow path (116) connecting the support surface (104) to the rear surface (114),
• a suction box (108) arranged on the rear surface (114) of the conveyor belt (102) and fluidly connected to one end of the flow path (116) which opens into the rear surface (114),
• at least one valve element (112) adjustable between a passage position and a blocking position,
wherein the valve element (112) interrupts or closes the at least one flow path (116) in its blocking position and establishes or releases it in its passage position, and
wherein the valve element (112) in the blocking position protrudes at least partially from the support surface (104) of the conveyor belt (102),
**characterized in that**
the valve element (212) is further assigned an axle element (222) around which the valve element (212) is pivotable and which divides the valve element (212) essentially into two sections (224, 226),
wherein one of these sections (226) is designed and intended to close the flow path (216).

2. Conveyor device according to claim 1,
**characterized in that** the valve element (112) is arranged in the passage position substantially flush with the support surface (104) or countersunk therein.

3. Conveyor device according to claim 1 or 2,
**characterized in that** the at least one valve element (112) is subjected to a preload in the direction towards the blocking position.

4. Conveyor device according to any one of the preceding claims, further comprising at least one pair of magnets (180, 182),
wherein one magnet (180) from the pair of magnets is positioned within the conveyor belt (102) or in a component (117) connected to it, while the other magnet (182) from the pair is embedded within the valve element (112),
wherein at least one of the pair of magnets is an active magnet, and
wherein the magnets (180, 182) are arranged and designed to exert either an attractive or repulsive force upon each other, thereby urging the valve element (112) from the passage position towards the blocking position.

5. Conveyor device according to any one of the preceding claims, further comprising at least one compressed gas nozzle (184) which is designed and intended to move the at least one valve element (112) from the passage position into the blocking position.

6. Conveyor device according to any one of the preceding claims,
**characterized in that** the valve element (112) is part of a valve insert (117) which is formed in a passage opening (118) of the conveyor belt (102), wherein preferably the flow path (116) is formed in the valve insert (117).

7. Conveyor device according to any one of the preceding claims,
**characterized in that** the axle element (222) is formed in one piece with the valve element (212).

8. Conveyor device according to any one of the preceding claims,
**characterized in that** the valve element (212) has a stop surface (232) which is designed and intended to interact with a counter-stop surface (234),
wherein the stop surface (232) and the counter-stop surface (234) are designed and intended in cooperation to limit a movement of the portion (224) which is not designed and intended to cover the flow path (216) into a recess (220) formed in the support surface (224).

9. Conveyor device according to any one of the preceding claims,
**characterized in that** a sealing lip (236) is arranged on the valve element (212) on the side facing the flow path (216), which sealing lip is designed and intended to cover the flow path (216).

10. Conveyor device according to any one of the preceding claims,
**characterized in that** the valve element (212) has a cutout (238) in the side facing the support surface (204), as well as at least one lateral cutout (240) and/or at least one cutout (242) in the side facing away from the support surface (204).

## Revendications

1. Convoyeur (100), comprenant :
• une bande transporteuse (102) dotée d'une surface d'appui (104) et d'une surface arrière (114) opposée à la surface d'appui (104),
• au moins un trajet d'écoulement (116) reliant la surface d'appui (104) à la surface arrière (114),
• un caisson d'aspiration (108) qui est disposé sur la surface arrière (114) de la bande transporteuse (102) et est relié de manière fluidique à une extrémité du trajet d'écoulement (116) qui débouche dans la surface arrière (114),
• au moins un élément clapet (112) réglable entre une position de passage et une position de blocage,
dans lequel l'élément clapet (112) interrompt ou ferme le au moins un trajet d'écoulement (116) dans sa position de blocage et l'établit ou le libère dans sa position de passage, et
dans lequel l'élément clapet (112) fait saillie au moins partiellement de la surface d'appui (104) de la bande transporteuse (102) dans la position de blocage,
**caractérisé en ce qu'**un élément d'axe (222) est en outre associé à l'élément clapet (212), autour duquel l'élément clapet (212) peut pivoter et qui divise l'élément clapet (212) sensiblement en deux portions (224, 226),
l'une de ces portions (226) étant conçue et destinée à fermer le trajet d'écoulement (216).

2. Convoyeur selon la revendication 1,
**caractérisé en ce que** l'élément clapet (112) est disposé de manière sensiblement affleurante avec la surface d'appui (104) ou encastré dans celle-ci dans la position de passage.

3. Convoyeur selon la revendication 1 ou 2,
**caractérisé en ce que** ledit au moins un élément clapet (112) est soumis à une précharge en direction de la position de blocage.

4. Convoyeur selon l'une quelconque des revendications précédentes, comprenant en outre au moins une paire d'aimants (180, 182),
dans lequel un aimant (180) de la paire d'aimants est disposé dans la bande transporteuse (102) ou une pièce (117) reliée à celle-ci et l'autre aimant (182) de la paire d'aimants est disposé dans l'élément clapet (112),
dans lequel au moins un aimant de la paire d'aimants est un aimant actif, et
dans lequel les aimants (180, 182) de la paire d'aimants sont disposés et conçus et destinés à exercer une force d'attraction ou une force de répulsion l'un sur l'autre pour solliciter l'élément clapet (112) de la position de passage vers la position de blocage.

5. Convoyeur selon l'une quelconque des revendications précédentes, comprenant en outre au moins une buse de gaz sous pression (184) conçue et destinée à amener ledit au moins un élément clapet (112) de la position de passage à la position de blocage.

6. Convoyeur selon l'une quelconque des revendications précédentes,
**caractérisé en ce que** l'élément clapet (112) fait partie d'un insert de vanne (117) formé dans un trou traversant (118) de la bande transporteuse (102), le trajet d'écoulement (116) étant de préférence formé dans l'insert de vanne (117).

7. Convoyeur selon l'une quelconque des revendications précédentes,
**caractérisé en ce que** l'élément d'axe (222) est réalisé d'une seule pièce avec l'élément clapet (212).

8. Convoyeur selon l'une quelconque des revendications précédentes,
**caractérisé en ce que** l'élément clapet (212) présente une surface de butée (232) conçue et destinée à coopérer avec une surface de contre-butée (234),
dans lequel la surface de butée (232) et la surface de contre-butée (234) sont conçues et destinées, dans leur interaction, à limiter un déplacement de la portion (224), qui n'est pas conçue et destinée à recouvrir le trajet d'écoulement (216), à l'intérieur d'un évidement (220) formé dans la surface d'appui (224).

9. Convoyeur selon l'une quelconque des revendications précédentes,
**caractérisé en ce qu'**une lèvre d'étanchéité (236) est disposée sur l'élément clapet (212) sur le côté faisant face au trajet d'écoulement (216), laquelle lèvre d'étanchéité est conçue et destinée à recouvrir le trajet d'écoulement (216).

10. Convoyeur selon l'une quelconque des revendications précédentes,
**caractérisé en ce que** l'élément clapet (212) présente un évidement (238) dans le côté faisant face à la surface d'appui (204), ainsi qu'au moins un évidement latéral (240) et/ou au moins un évidement (242) dans le côté opposé à la surface d'appui (204).
